# EUROPÄISCHE PATENTSCHRIFT

(11) **EP 4 491 890 B1**
(45) Veröffentlichungstag und Bekanntmachung des Hinweises auf die Patenterteilung: **29.07.2026**
(21) Anmeldenummer: 24181042.3
(22) Anmeldetag: 10.06.2024
(51) Int. Cl.: F16B 13/14

(54) **ABDICHTENDE ANKERHÜLSE**
SEALING ANCHOR SLEEVE
MANCHON D'ANCRAGE ÉTANCHE

(30) Priorität: 11.07.2023 DE 102023118268
(43) Veröffentlichungstag der Anmeldung: 15.01.2025
(73) Patentinhaber: TOX-Dübel-Technik GmbH, 72505 Krauchenwies (DE)
(72) Erfinder: Wilhelm, Daniel, 88690 Uhldingen-Mühlhofen (DE); Kiesner, Daniel, 50935 Köln (DE); Flühs, Andreas, 78253 Eigeltingen-Heudorf (DE); Zerull, Frank, 72218 Wildberg (DE)
(74) Vertreter: Stadler, Franz

(56) Entgegenhaltungen:
- US-A1- 2004 250 497

## Beschreibung

Die vorliegende Erfindung betrifft einen Ankerhülse gemäß dem Oberbegriff des Anspruches 1 und ein Verankerungssystem gemäß dem Oberbegriff des Anspruches 14.

Ankerhülsen werden eingesetzt, um einen Fixierungsgegenstand, beispielsweise ein Waschbecken oder einen Hängeschrank mit einer großen Masse, an einem Verankerungsgrund, insbesondere einem Mauerwerk aus Hochlochziegeln eines Gebäudes, zu befestigen. Die Ankerhülsen sind als Siebhülsen aus Kunststoff ausgebildet. In der Ankerhülse sind eine große Anzahl an Austrittsöffnungen oder Sieblöcher ausgebildet. In den Verankerungsgrund wird zunächst mit einem Bohrer eine Bohrung eingearbeitet und anschließend die Ankerhülse in die Bohrung eingeführt. Die Ankerhülse weist einen in Längsrichtung der Ankerhülse sich erstreckenden Innenraum auf. In diesen Innenraum der Ankerhülse wird anschließend ein aushärtbarer Verbundstoff, beispielsweise Mörtel oder Ein- oder Mehrkomponentenkleber, eingebracht. Darauffolgend wird eine Ankerstange in den Innenraum mit dem aushärtbaren Verbundstoff eingeführt, sodass der Verbundstoff von der Ankerstange verdrängt wird und durch die Austrittsöffnungen in einen Zwischenraum zwischen der Außenseite der Ankerhülse und dem Verankerungsgrund eingeführt. Nach dem Aushärten des Verbundstoffes ist die Ankerstange form- und stoffschlüssig an dem Verankerungsgrund befestigt und verankert. Ankerhülse mit der Ankerstange als einem Verankerungssystem werden insbesondere bei Hochlochziegel eingesetzt, weil der ausgehärtete Verbundstoff in den Hohlräumen des Hochlochziegel einen Hinterschnitt bildet und dadurch formschlüssig große Kräfte von der Ankerstange auf den Hochlochziegel übertragen werden können. In nachteiliger Weise können diese Ankerhülsen mit der Ankerstange als dem Verankerungssystem nicht in Nassräumen eingesetzt werden, weil diese Verankerungssysteme keine ausreichende Abdichtung ermöglichen. Wasser und Feuchtigkeit kann in die Bohrung mit dem Verankerungssystem mit der Ankerhülse und der Ankerstange gelangen und dadurch Schäden am Mauerwerk als dem Verankerungsgrund als auch an dem Verankerungssystem, insbesondere an der Ankerstange aufgrund Korrosion, verursachen.

Die EP 1 370 774 B1 offenbart eine Ankerhülse zur Injektionsbefestigung, wobei die Ankerhülse Austrittsöffnungen zum Austritt von in die Ankerhülse injiziertem Mörtel aufweist und wobei die Ankerhülse nach innen stehende, verformbare Stützelemente aufweist, die eine in die Ankerhülse eingebrachte Ankerstange in der Ankerhülse abstützen, die Stützelemente als in Längsrichtung oder wendelförmige verlaufende Stützrippen ausgebildet sind und dass die Stützrippen in Umfangsrichtung versetzt zu gedachten Axialebenen der Ankerhülse angeordnet sind.

Die EP 2 208 896 A1 zeigt eine Ankerhülse zur chemischen Verankerung einer Ankerstange in einem Bohrloch und die Ankerhülse Austrittsöffnungen für eine aushärtende Masse aufweist, wobei die Ankerhülse eine in Längsrichtung verlaufende Fuge aufweist, die von einer quer zur Fuge längenveränderlichen Fugenüberbrückung überbrückt ist.

Die US 2004/250497 A1 offenbart eine Ankerhülse aus einem Rahmen und einem Rohr. Das Rohr weist Öffnungen auf und ist in den Rahmen eingefügt. Zur Herstellung einer Verbindung bei einer Anordnung der Ankerhülse in einer Bohrung wird Klebstoff in den Innenbereich des Rahmens eingefügt. Anschließend wird der Klebstoff durch das Einführen eines Ankers in den Innenbereich des Rahmens aus der Ankerhülse verdrängt durch die Öffnungen im Rohr und durch Öffnungen im vorderen axialen Abschnitt des Rahmens.

Die Aufgabe der vorliegenden Erfindung besteht deshalb darin, einen Ankerhülse und ein Verankerungssystem zur Verankerung einer Ankerstange in einer Bohrung in einem Verankerungsgrund mit einem aushärtbaren Verbundstoff zur Verfügung zu stellen, bei dem eine zuverlässige und sichere Abdichtung der Bohrung nach der Verankerung der Ankerstange sowie dem Aushärten des Verbundstoffes gewährleistet ist.

Diese Aufgabe wird gelöst mit einer Ankerhülse zur Verankerung einer Ankerstange in einer Bohrung in einem Verankerungsgrund mit einem aushärtbaren Verbundstoff, umfassend einen in axialer Richtung sich erstreckenden Innenraum, der von einer Innenseite der Ankerhülse begrenzt ist zur Aufnahme der Ankerstange und des aushärtbaren Verbundstoffes, Austrittsöffnungen zum Austreten des in den Innenraum injizierten Verbundstoffes nach außerhalb der Ankerhülse in die Bohrung, ein vorderes Ende, ein hinteres Ende mit einer Öffnung als hinteres Ende des Innenraumes zur Einführung der Ankerstange, wobei die Ankerhülse fiktiv in axialer Richtung in einen axialen hinteren Endbereich im Bereich des hinteren Endes und in einen axialen Hauptbereich außerhalb des axialen hinteren Endbereiches unterteilt ist und an dem hinteren Endbereich der Ankerhülse der Außendurchmesser der Ankerhülse kleiner ist als der Außendurchmesser an dem Hauptbereich, insbesondere kleiner ist als 98%, 95%, 90% oder 80% des Außendurchmessers an dem Hauptbereich der Ankerhülse, zur Ausbildung eines Dichtringes aus dem Verbundstoff zwischen einer radialen Außenseite der Ankerhülse an dem hinteren Endbereich und einer Innenseite der Bohrung in dem Verankerungsgrund als Abdichtbereich, so dass die Ankerhülse eine abdichtende Ankerhülse ausgebildet, wobei vorzugsweise der Außendurchmesser an dem Hauptbereich ohne Berücksichtigung von lokalen Vorsprüngen, insbesondere ohne Formschlusselemente, bestimmt ist. Vorzugsweise umfasst der hinteren Endbereich nicht den äußersten hinteren Endbereich, insbesondere nicht den Setzflansch. Vorzugsweise umfasst der hinteren Endbereich nicht den vorderen Endbereich, insbesondere nicht die Vorderwandung. Vorzugsweise umfasst der hinteren Endbereich nicht den Hauptbereich. Vorzugsweise umfasst der Hauptbereich nicht den äußersten hinteren Endbereiches, insbesondere nicht den Setzflansch. Vorzugsweise umfasst der Hauptbereich nicht den vorderen Endbereich, insbesondere nicht die Vorderwandung. Vorzugsweise umfasst der Hauptbereich nicht den hinteren Endbereich. Vorzugsweise sind die Austrittsöffnungen, insbesondere ausschließlich, an dem hinteren Endbereich und dem Hauptbereich ausgebildet. Vorzugsweise sind an dem äußersten hinteren Endbereich und dem vorderen Endbereich keine Austrittsöffnungen ausgebildet. Vorzugsweise sind die Austrittsöffnungen, insbesondere ausschließlich, an der radialen Außenseite der Ankerhülse ausgebildet.

In einer weiteren Ausführungsform ist an dem hinteren Endbereich der Ankerhülse das Verhältnis aus der Summe der Flächen der Austrittsöffnungen der Ankerhülse zu der Außenfläche der Ankerhülse mit den Austrittsöffnungen größer, insbesondere um wenigstens 5%, 10%, 20%, 30%, 40%, 50%, 100%, 200% oder 300% größer ist, als dem Hauptbereich, um das Austreten des Verbundstoffes an dem hinteren Endbereich im Vergleich zu dem Hauptbereich zu erleichtern und ein Abdichten in einem Zwischenraum zwischen einer radialen Außenseite der Ankerhülse an dem hinteren Endbereich und der Innenseite der Bohrung in dem Verankerungsgrund als Abdichtbereich zu ermöglichen, so dass die Ankerhülse eine abdichtende Ankerhülse ausgebildet und/oder an dem hinteren Endbereich die Fläche je einer Austrittsöffnung größer als die, insbesondere maximale, Fläche je einer Austrittsöffnung an dem Hauptbereich. Vorzugsweise ist an dem hinteren Endbereich die Fläche je einer Austrittsöffnung größer als das 2-, 3-, 5-, 7- oder 10-Fache der, insbesondere maximalen, Fläche je einer Austrittsöffnung an dem Hauptbereich.

In einer weiteren Variante sind an dem hinteren Endbereich die Flächen von je wenigstens 50% oder 70 % der Austrittsöffnungen, insbesondere sämtlicher jeweiligen Austrittsöffnungen, größer als die, insbesondere maximale, Fläche je einer Austrittsöffnung an dem Hauptbereich.

In einer zusätzlichen Ausgestaltung ist die axiale Ausdehnung der Austrittsöffnungen an dem hinteren Endbereich größer, insbesondere um das 0,5-, 1-, 3-, 5-, 10- oder 20-Fache größer, als die, insbesondere maximale, axiale Ausdehnung der Austrittsöffnungen an dem Hauptbereich.

Vorzugsweise umfasst die Ankerhülse im Wesentlichen, insbesondere mit einer Abweichung von weniger als 30°, 20° oder 10°, in axialer Richtung ausgerichtete Längsstege. Vorzugsweise sind die Längsstege gerade ausgebildet.

In einer weiteren Variante umfasst die Ankerhülse im Wesentlichen, insbesondere mit einer Abweichung von weniger als 30°, 20° oder 10°, in radialer Richtung ausgerichtete Umfangsstege. Vorzugsweise sind die Umfangsstege gekrümmt ausgebildet, insbesondere mit einem konstanten Krümmungsradius. Vorzugsweise sind die Umfangsstege im Wesentlichen gerade in Umfangsrichtung zwischen je zwei Längsstegen und mit einer Krümmung und/oder einem Knick an den Längsstegen ausgebildet.

In einer zusätzlichen Ausgestaltung sind die Umfangsstege an einer radialen Außenseite der Längsstege befestigt, so dass der radiale Abstand der radialen Außenseiten der Längsstege zu der zentrischen Längsachse der Ankerhülse kleiner ist als der radiale Abstand der radialen Außenseiten der Umfangsstege zu der zentrischen Längsachse der Ankerhülse.

In einer zusätzlichen Ausführungsform ist je eine Austrittsöffnung an dem Hauptbereich, insbesondere ausschließlich, von zwei Längsstegen und zwei Umfangsstegen begrenzt.

In einer weiteren Variante ist je eine Austrittsöffnung an dem hinteren Endbereich von zwei Längsstegen, einem Umfangssteg und einem Setzflansch begrenzt.

In einer ergänzenden Ausführungsform sind an dem hinteren Endbereich keine Umfangsstege ausgebildet.

Insbesondere ist an dem hinteren Endbereich der Ankerhülse der Außendurchmesser der Ankerhülse kleiner als der Außendurchmesser an dem Hauptbereich der Ankerhülse, insbesondere kleiner ist als der Außendurchmesser der Umfangsstege an dem Hauptbereich der Ankerhülse, weil an dem hinteren Endbereich keine Umfangsstege ausgebildet sind und der radiale Abstand der radialen Außenseiten der Längsstege zu der zentrischen Längsachse der Ankerhülse kleiner ist als der radiale Abstand der radialen Außenseiten der Umfangsstege zu der zentrischen Längsachse der Ankerhülse.

In einer weiteren Ausgestaltung ist die radiale Außenseite der Ankerhülse, insbesondere ausschließlich, mit einem minimalen radialen Abstand zu der zentrischen Längsachse an dem hinteren Endbereich der Ankerhülse, insbesondere von den radialen Außenseiten der Längsstege, ausgebildet.

Zweckmäßig entspricht die Differenz aus dem radialen Abstand der radialen Außenseiten der Umfangsstege zu der zentrischen Längsachse der Ankerhülse zu dem radialen Abstand der radialen Außenseiten der Längsstege zu der zentrischen Längsachse der Ankerhülse im Wesentlichen, insbesondere mit einer Abweichung von weniger als 30 %, 20 oder 10 %, der radialen Ausdehnung der Umfangsstege.

Erfindungsgemäßes Verankerungssystem zur Fixierung eines Fixierungsgegenstandes in einer Bohrung in einem Verankerungsgrund mit einem aushärtbaren Verbundstoff, umfassend eine Ankerhülse, eine Ankerstange, wobei die Ankerhülse als eine in dieser Schutzrechtsanmeldung beschriebene Ankerhülse ausgebildet ist.

In einer weiteren Variante ist die Ankerstange zweiteilig ausgebildet mit einer Hauptankerstange und einem Zusatzbauteil zur, vorzugsweise form- und/oder kraftschlüssigen, Fixierung an der Hauptankerstange, insbesondere mit einer Gewinde- und/oder Bajonettverbindung.

In einer ergänzenden Ausführungsform ist radialen Abstand der radialen Außenseiten der Umfangsstege zu der zentrischen Längsachse der Ankerhülse im Wesentlichen, insbesondere mit einer Abweichung von weniger als 30%, 20% oder 10%, konstant.

In einer ergänzenden Ausführungsform ist radialen Abstand der radialen Außenseiten der Längsstege zu der zentrischen Längsachse der Ankerhülse im Wesentlichen, insbesondere mit einer Abweichung von weniger als 30%, 20% oder 10%, konstant.

In einer ergänzenden Ausgestaltung ist ein Außendurchmesser ein maximaler Außendurchmesser.

In einer ergänzenden Ausgestaltung ist ein Innendurchmesser ein minimaler Außendurchmesser.

Vorzugsweise ist ein Innendurchmesser ein minimaler Innendurchmesser.

In einer zusätzlichen Ausführungsform ist die Ankerhülse einteilig ausgebildet.

In einer weiteren Variante entspricht der Außendurchmesser des Setzflansches im Wesentlichen, insbesondere mit einer Abweichung von weniger als 30%, 20%, 10 %, 5 % oder 3 %, dem Außendurchmesser an dem Hauptbereich mit Berücksichtigung von lokalen Vorsprüngen, insbesondere der Formschlusselemente, und/oder dem Außendurchmesser der Vorderwandung. Der Außendurchmesser der Ankerhülse an dem Setzflansch, an dem Hauptbereich mit Berücksichtigung von lokalen Vorsprüngen, insbesondere der Formschlusselemente, und an der Vorderwandung sind somit im Wesentlichen, insbesondere mit einer Abweichung von weniger als 30%, 20%, 10 %, 5 % oder 3 %, identisch.

Vorzugsweise ist an dem hinteren Endbereich der Außendurchmesser kleiner als außerhalb des hinteren Endbereiches, insbesondere kleiner als 98%, 95%, 90% oder 80% des Außendurchmesser der Ankerhülse außerhalb des hinteren Endbereiches d. h. kleiner als der Außendurchmesser der Ankerhülse an dem Setzflansch, an dem Hauptbereich mit Berücksichtigung der lokalen Vorsprünge, insbesondere der Formschlusselemente, und an der Vorderwandung.

In einer ergänzenden Ausgestaltung ist die Ankerhülse, insbesondere vollständig, aus Kunststoff, insbesondere thermoplastischen und/oder duroplastischen und/oder faserverstärkten, Kunststoff, ausgebildet.

In einer weiteren Variante ist die Ankerstange aus Metall und/oder, vorzugsweise faserverstärkten, Kunststoff ausgebildet.

In einer zusätzlichen Ausgestaltung umfasst das Verankerungssystem den Verbundstoff.

Vorzugsweise ist der Verbundstoff Mörtel, insbesondere Kunstharzmörtel, und/oder Ein- oder Mehrkomponentenkleber

In einer weiteren Variante ist der Verbundstoff des Verankerungssystems in einem Behälter und/oder einer Probe und/oder in einer Injektionsspritze gelagert.

In einer weiteren Variante beträgt die Länge als axiale Ausdehnung des hinteren Endbereiches zwischen 2 % und 40 %, insbesondere zwischen 5 % und 25 %, der Länge der Ankerhülse.

In einer weiteren Ausgestaltung beträgt die Länge des Hauptbereiches zwischen 40 % und 80 %, insbesondere zwischen 60 % und 80 %, der Länge der Ankerhülse.

In einer weiteren Ausgestaltung beträgt die Länge des vorderen Endbereiches, insbesondere die Länge der Vorderwandung, zwischen 0,2 % und 5 %, insbesondere zwischen 1 % und 3%, der Länge der Ankerhülse.

In einer weiteren Ausgestaltung beträgt die Länge des äußersten hinteren Endbereiches, insbesondere die Länge des Setzflansches, zwischen 0,2 % und 5 %, insbesondere zwischen 1 % und 3%, der Länge der Ankerhülse.

Vorzugsweise beträgt die Länge der Ankerhülse zwischen 1 cm und 50 cm, insbesondere zwischen 3 cm und 20 cm.

In einer weiteren Ausführungsform sind an dem Hauptbereich der Ankerhülse Austrittsöffnungen ausgebildet. In einer weiteren Ausführungsform sind an hinteren Endbereich der Ankerhülse Austrittsöffnungen ausgebildet. Vorzugsweise ist die Anzahl der Austrittsöffnungen an dem hinteren Endbereich größer als 3, 5 oder 7. Vorzugsweise ist die Anzahl der Austrittsöffnungen an dem Hauptbereich größer als 5, 20, 30, 50 oder 70.

Vorzugsweise ist die Anzahl der Austrittsöffnungen an dem Hauptbereich größer als die Anzahl der Austrittsöffnungen an dem hinteren Endbereich, insbesondere größer als das 2-, 5-, 10- oder 20-Fache der Anzahl der Austrittsöffnungen an dem hinteren Endbereich.

In einer ergänzenden Ausgestaltung ist an dem hinteren Endbereich der Ankerhülse der Außendurchmesser der Ankerhülse kleiner als einem vorderen Endbereich, insbesondere einer Vorderwandung als vorderen Endbereich, der Ankerhülse und/oder kleiner als einem äußersten hinteren Endbereich, insbesondere einen Setzflansch als äußersten hinteren Endbereich, der Ankerhülse zur vorzugsweise Ausbildung eines Dichtringes aus dem Verbundstoff zwischen einer radialen Außenseite der Ankerhülse an dem hinteren Endbereich und einer Innenseite der Bohrung in dem Verankerungsgrund als Abdichtbereich, so dass die Ankerhülse eine abdichtende Ankerhülse ausgebildet.

In einer weiteren Ausführungsform ist an dem hinteren Ende der Ankerhülse ein Setzflansch ausgebildet zur Auflage auf den Verankerungsgrund und/oder zur Anordnung in der Bohrung in dem Verankerungsgrund und zur Begrenzung des Dichtringes nach außerhalb der Bohrung.

Vorzugsweise ist an der Ankerhülse, insbesondere an einem hinteren Ende, ein Setzflansch ausgebildet zur Verhinderung eines Auspressens des aushärtbaren Verbundstoffes aus dem Dichtring.

Vorzugsweise ist an der Ankerhülse, insbesondere an einem hinteren Ende, ein Setzflansch als Anschlagelement ausgebildet zur Begrenzung des Einführens des Ankerhülse in die Bohrung des Verankerungsgrundes, wobei vorzugsweise der Setzflansch in radialer Richtung den maximalen radialen Abstand zu einer zentrischen Längsachse der Ankerhülse aufweist und vorzugsweise der Setzflansch zusätzlich zur Verhinderung eines Auspressens des aushärtbaren Verbundstoffes aus dem Dichtring fungiert.

In einer weiteren Ausgestaltung ist der Setzflansch als ein radial vorstehender Anschlagring ausgebildet.

Vorzugweise ist der Setzflansch im Wesentlichen in tangentialer Richtung als Umfangsrichtung ausgebildet. Der Setzflansch weist eine radiale Ausdehnung, eine axiale Ausdehnung und eine tangentiale Ausdehnung auf und die tangentiale Ausdehnung, d. h. Ausdehnung in Umfangsrichtung, ist um das 2-, 4-, 6- oder 8-Fache größer als die radiale und/oder axiale Ausdehnung. Zweckmäßig entspricht die radiale Ausdehnung des Setzflansches im Wesentlichen der axialen Ausdehnung des Setzflansches, insbesondere mit einer Abweichung von weniger als 70%, 50%, 30% oder 10%.

In einer weiteren Ausgestaltung beträgt die Länge des hinteren Endbereiches des Ankerhülse wenigstens 5%, 20%, 30% oder 40% der Länge der Ankerhülse und/oder weniger als 40%, 30% oder 20% der Länge der Ankerhülse.

In einer ergänzenden Variante ist der Innenraum der Ankerhülse in axialer Richtung an dem vorderen Ende von einer Vorderwandung, insbesondere geschlossenen Vorderwandung, begrenzt. Während des Einführens der Ankerhülse in die Bohrung an dem Verankerungsgrund können damit in vorteilhafter Weise keine Partikel oder Teile an dem vorderen Ende der Ankerhülse in den Innenraum gelangen.

Vorzugsweise entspricht der Außendurchmesser der Ankerstange als der Hauptankerstange im Wesentlichen, insbesondere mit einer Abweichung von weniger als 30%, 20%, 10%, 5%, 3%, 2% oder 1%, dem Innendurchmesser der Öffnung an dem hinteren Ende, insbesondere dem Innendurchmesser des Innenraumes an den Längsstegen.

In einer ergänzenden Variante ist an der Ankerstange, insbesondere an der Hauptankerstange, wenigstens eine Formschlussgeometrie, vorzugsweise ein Vorsprung und/oder eine Aussparung, insbesondere ein Gewinde, ausgebildet zur formschlüssigen Befestigung der Ankerstange an dem ausgehärteten Verbundstoff.

Vorzugsweise ist die wenigstens eine Formschlussgeometrie der Ankerstange an einer radialen Außenseite der Ankerstange ausgebildet.

In einer weiteren Ausgestaltung ist die Ankerstange einteilig ausgebildet.

In einer zusätzlichen Variante ist die Ankerstange von einer Schraube, insbesondere nur von einer Schraube, gebildet. Unter den Begriff der Ankerstange wird damit vorzugsweise auch eine Schraube subsumiert.

Zweckmäßig ist die Ankerhülse von der Ankerstange aufweitbar aufgrund der elastischen und/oder plastischen Eigenschaften der Ankerhülse.

Im Nachfolgenden wird ein Ausführungsbeispiel der Erfindung unter Bezugnahme auf die beigefügten Zeichnungen näher beschrieben.

Es zeigt:
- Fig. 1: eine perspektivische Ansicht einer Ankerhülse mit Ankerstange als Verankerungssystem in einem Hochlochziegel als Verankerungsgrund,
- Fig. 2: eine Seitenansicht der Ankerhülse mit Ankerstange in dem Hochlochziegel gemäß Fig. 1,
- Fig. 3: eine Seitenansicht nur der Ankerhülse gemäß Fig. 1,

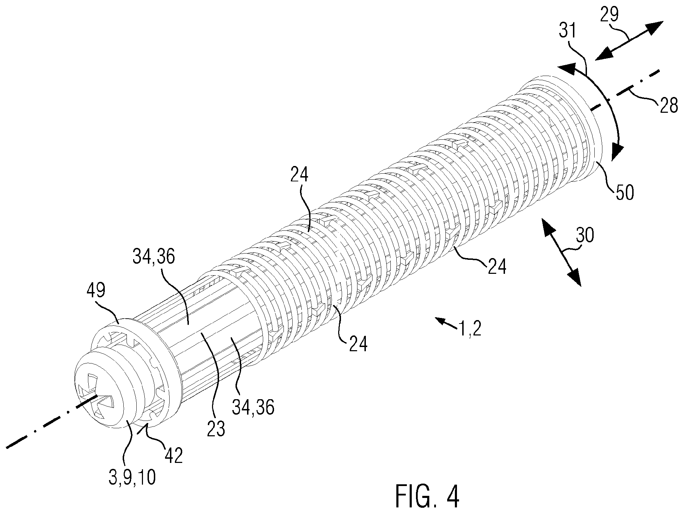

- Fig. 4: eine perspektivische Ansicht der Ankerhülse gemäß Fig. 1 mit Ankerstange,
- Fig. 5: eine perspektivische Ansicht nur der Ankerhülse gemäß Fig. 1,
- Fig. 6: eine vergrößerte perspektivische Ansicht eines Hauptbereiches der Ankerhülse gemäß Fig. 1,

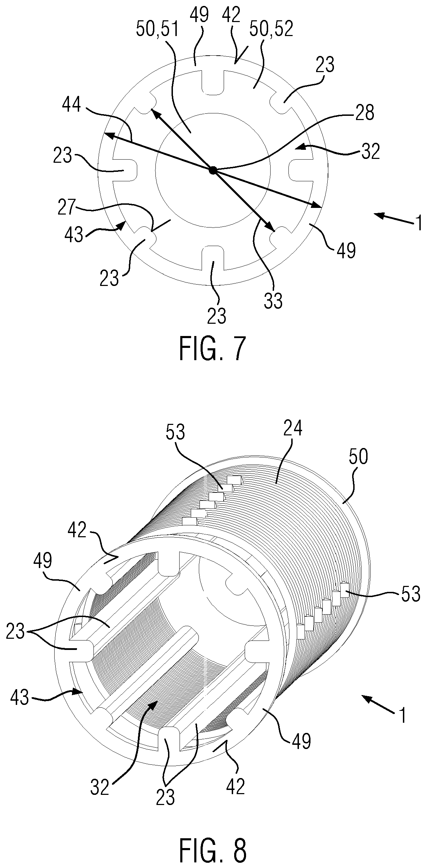

- Fig. 7: eine Rückansicht der Ankerhülse gemäß Fig. 1,
- Fig. 8: eine weitere perspektivische Ansicht nur der Ankerhülse gemäß Fig. 1,

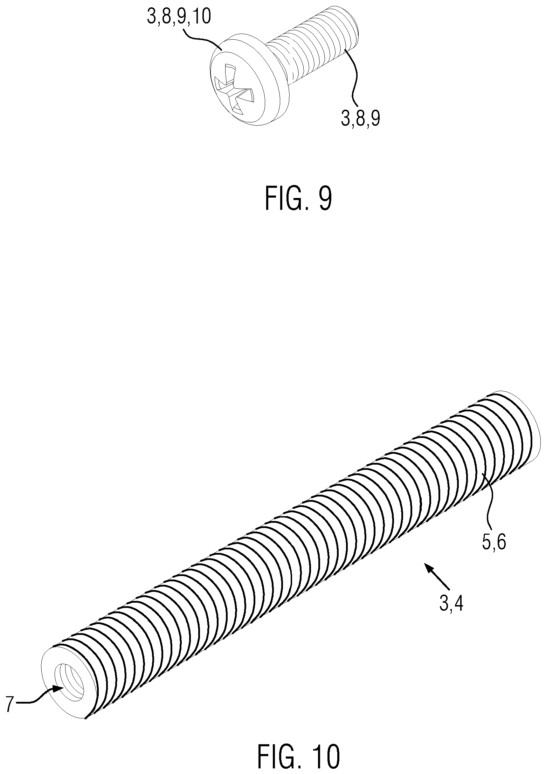

- Fig. 9: eine perspektivische Ansicht einer Schraube als Zusatzbauteil einer zweiteiligen Ankerstange und
- Fig. 10: eine perspektivische Ansicht einer Hauptankerstange der zweiteiligen Ankerstange.

Eine Ankerhülse 1 dient zur Fixierung oder Verankerung eines Fixierungsgegenstandes 17 als beispielsweise ein Anbauteil 18. Der Fixierungsgegenstand 17 ist beispielsweise ein Waschbecken oder ein Hängeschrank (nicht dargestellt). Ein Verankerungssystem 2 umfasst die Ankerhülse 1 und eine Ankerstange 3. Die Ankerstange 3 ist aus Metall, besondere Stahl oder Edelstahl, ausgebildet und 2-teilig. Die Ankerstange 3 umfasst eine Hauptankerstange 4 und ein Zusatzbauteil 8. Die Hauptankerstange 4 weist an einer radialen Außenseite 5 ein Gewinde 6 auf. An einem hinteren Ende der Hauptankerstange 4 ist eine zentrische Gewindebohrung 7 mit einem Innengewinde ausgebildet. Das Zusatzbauteil 8 ist eine Schraube 9 mit einem Schraubenkopf 10. Die Schraube 9 mit einem Außengewinde am Schraubenschaftes kann in das Innengewinde an der zentrischen Gewindebohrung 7 der Hauptankerstange 4 eingeschraubt werden und damit form- und/oder kraftschlüssig an der Hauptankerstange 4 befestigt werden.

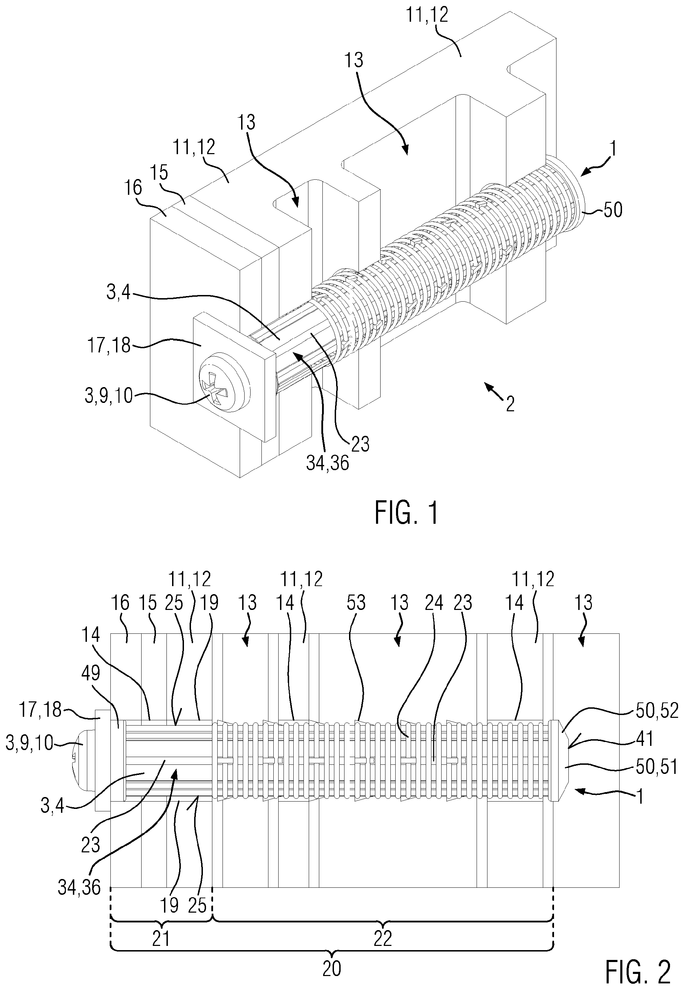

Ein Verankerungsgrund 11 ist ein Hochlochziegel 12 (Fig. 1 und 2). Der Hochlochziegel 12 weist mehrere Hohlräume 13 auf. Zur Befestigung oder Fixierung oder Verankerung des Fixierungsgegenstandes 17 an dem Verankerungsgrund 11 wird in den Hochlochziegel 12 eine Bohrung 14 als ein Bohrloch 14 eingearbeitet. Der Verankerungsgrund 11 ist eine Innenwand in einem Gebäude und Fliesen 16 sind an der Innenwand mit Klebstoff 15 befestigt.

Die Ankerhülse 1 ist aus Kunststoff, insbesondere thermoplastischen Kunststoff, einteilig mittels Spritzgießen hergestellt. Die Ankerhülse 1 weist ein vorderes Ende 41 und ein hinteres Ende 42 auf. Die Ankerhülse 1 weist eine zentrische Längsachse 28 auf und eine axiale Richtung 29 oder Längsrichtung 29 ist parallel zu der zentrischen Längsachse 28 ausgerichtet. Eine radiale Richtung 30 ist senkrecht zu der zentrischen Längsachse 28 ausgerichtet und eine tangentiale Richtung 31 oder Umfangsrichtung 31 ist tangential zu einem fiktiven Kreis ausgerichtet und der fiktive Kreis weist einen Mittelpunkt auf, der der zentrischen Längsachse 28 entspricht und dieser fiktive Kreis in einer fiktiven Ebene ist senkrecht zu der zentrischen Längsachse 28. Die Ankerhülse 1 ist symmetrisch zu der zentrischen Längsachse 28 ausgebildet. Am vorderen Ende 41 ist eine Vorderwandung 50 ausgebildet. Die Vorderwandung 50 ist in eine zentrische Endwandung 51 und in eine Verbindungswandung 52 unterteilt. Zentrische Endwandung 51 ist senkrecht zu der zentrischen Längsachse 28 ausgerichtet. Die ringförmige Verbindungswandung 52 umschließt vollständig in Umfangsrichtung 31 die zentrische Endwandung 51 und ist konisch verjüngend in Richtung zu der zentrischen Endwandung 51 ausgebildet. Die Vorderwandung 50 bildet einen vorderen Endbereich der Ankerhülse 1. An dem hinteren Ende 42 der Ankerhülse ist ein Setzflansch 49 ausgebildet. Der Setzflansch 49 bilden einen äußersten hinteren Endbereich der Ankerhülse 1. Der Außendurchmesser des Setzflansches 49 entspricht im Wesentlichen, insbesondere mit einer Abweichung von weniger als 30 %, 20 %, 10 %, 5% oder 3 %, dem Außendurchmesser der Vorderwandung 50. Die Ankerhülse 1 begrenzt an der Innenseite einen im Wesentlichen zylindermantelförmigen Innenraum 32. Das hintere Ende des Innenraumes 31 ist eine hintere Öffnung 43 der Ankerhülse 1. Die Öffnung 43 ist in radialer Richtung 30 von dem Setzflansch 49 begrenzt. Der Setzflansch 49 weist am vorderen und radialen Ende eine vollständig umlaufende Phase 61 als konische Verjüngung 61 auf, um das Einführen des Setzflansches 49 in die Bohrung 14 des Verankerungsgrundes 11 zu erleichtern.

Die Ankerhülse 1 umfasst Längsstege 23, welche im Wesentlichen in axialer Richtung 29 ausgerichtet sind. Umfangsstege 24 der Ankerhülse 1 sind in Umfangsrichtung 31 ausgerichtet. Die Längsstege 23 verbinden in axialer Richtung 29 den ringförmigen Setzflansch 49 mit der geschlossenen Vorderwandung 50. Die radialen Innenseiten 27 der Längsstege 23 weisen in einem Schnitt senkrecht zu der zentrischen Längsachse 28 an dem Innenraum 32 einen minimalen radialen Abstand zu der zentrischen Längsachse 28 auf. Der Innenraum 32 weist an den Längsstegen 23 einen minimalen Innendurchmesser 33 auf. Auf der radialen Außenseite 25 der Längsstege 23 sind die Umfangsstege 24 befestigt. Die Differenz aus dem radialen Abstand 46 der radialen Außenseite 26 der Umfangsstege 24 zu der zentrischen Längsachse 28 und dem radialen Abstand 48 der radialen Außenseite 25 der Längsstege 23 zu der zentrischen Längsachse 28 entspricht somit der Dicke oder der radialen Ausdehnung der Umfangsstege 24.

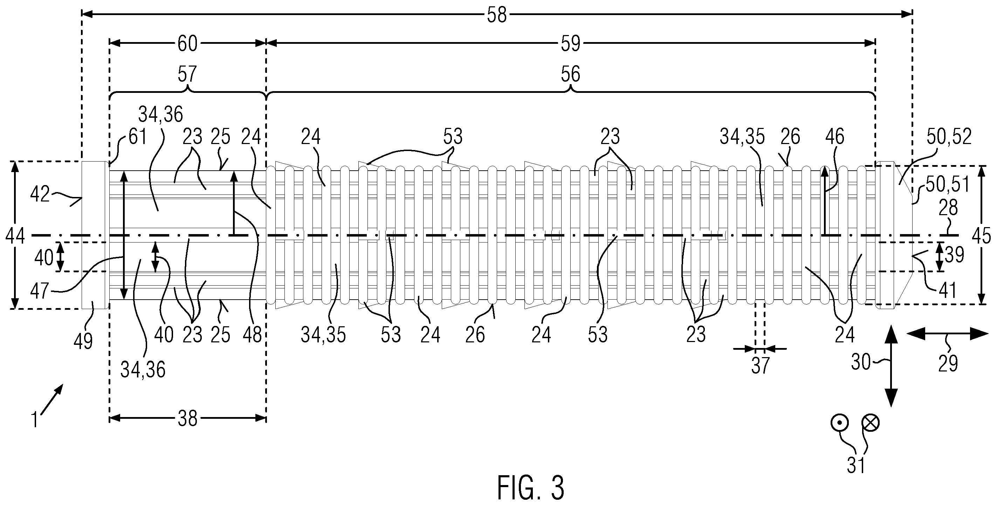

Die Ankerhülse 1 ist in axialer Richtung 29 zwischen dem Setzflansch 49 und der Vorderwandung 50 fiktiv in einen hinteren Endbereich 57 und in einen Hauptbereich 56 unterteilt. An dem Hauptbereich 56 sind sowohl die Längsstege 23 als auch die Umfangsstege 24 ausgebildet. An dem hinteren Endbereich 57 sind keine Umfangsstege 24 und nur die Längsstege 23 ausgebildet. Austrittsöffnungen 34 als Sieblöcher 34 dienen zum Leiten eines aushärtbaren Verbundstoffes, beispielsweise Mörtel, insbesondere Kunstharzmörtel, oder Ein- oder Mehrkomponentenkleber, von dem Innenraum 32 durch die Austrittsöffnungen 34 in einen Raum außerhalb der Ankerhülse 1 d. h. in einen Zwischenraum als Ringraum zwischen der Bohrung 14 in dem Verankerungsgrund 11 und der Ankerhülse 1 sowie in die Hohlräume 13. Die Austrittsöffnungen 34 sind als Austrittsöffnungen 35 an dem Hauptbereich 56 von den Längsstegen 23 und den Umfangsstege 24 begrenzt. Lediglich die in axialer Richtung 29 vordersten Austrittsöffnungen 35 sind in axialer Richtung 29 nach vorne von der Vorderwandung 50 begrenzt. Die Austrittsöffnungen 34 als Austrittsöffnungen 36 an dem hinteren Endbereich 57 sind von den Längsstegen 23, dem Setzflansch 49 und dem hintersten Umfangssteg 24 begrenzt. Je eine Austrittsöffnung 36 an dem hinteren Endbereich 57 ist somit von 2 Längsstegen 23, dem Setzflansch 49 und dem hintersten Umfangsstege 24 begrenzt. Die Längsstege 23 sind parallel zueinander und in axialer Richtung 29 ausgerichtet, sodass die radiale Ausdehnung 39 der Austrittsöffnungen 35 an dem Hauptbereich 56 der radialen Ausdehnung 40 der Austrittsöffnungen 36 an dem hinteren Endbereich 57 entspricht. Die axiale Ausdehnung 38 der Austrittsöffnungen 36 an dem hinteren Endbereich 57 ist wesentlich größer, d. h. ungefähr um das 15-Fache größer, als die axiale Ausdehnung 37 der Austrittsöffnungen 35 an dem Hauptbereich 56. Dies liegt an der großen Anzahl an Umfangsstegen 24 an dem Hauptbereich 56. Die axiale Ausdehnung 38 der Austrittsöffnungen 36 an dem hinteren Endbereich 57 entspricht der Länge 60 als der axialen Ausdehnung in axialer Richtung 29 des hinteren Endbereiches 57. Das Verhältnis aus der Summe der Flächen der Austrittsöffnungen 34, 36 der Ankerhülse 1 zu der radialen Außenfläche der Ankerhülse 1 an dem hinteren Endbereich 57 ist größer als das Verhältnis aus der Summe der Flächen der Austrittsöffnungen 34, 35 der Ankerhülse 1 zu der radialen Außenfläche der Ankerhülse 1 an dem Hauptbereich 56 der Ankerhülse 1. Der Hauptbereich 56 weist eine Länge 59 auf. Die Ankerhülse 1 weist eine Länge 58 als die axiale Ausdehnung in axialer Richtung 29 zwischen dem vorderen Ende 41 und dem hinteren Ende 42 auf (Fig. 3). Die Länge 60 des hinteren Endbereiches 57 entspricht ungefähr 20 % der Länge 58 der Ankerhülse 1.

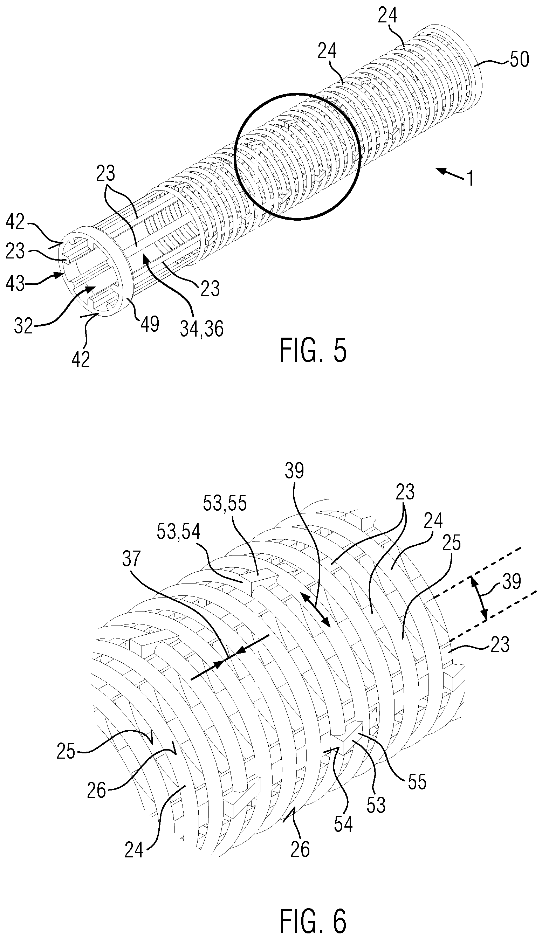

In Umfangsrichtung 31 sind an jeden zweiten Längssteg 24, d. h. an insgesamt 4 von 8 Längsstegen 24, Formschlusselemente 53 als radiale Vorsprünge 53 ausgebildet. Die Formschlusselemente 53 (Fig. 6) weisen eine Vorderseite 55 und eine Rückseite 54 auf. Die Rückseite 54 ist im Wesentlichen, d. h. mit einer Abweichung von weniger als 30° 20° oder 10°, in radialer Richtung 30 ausgerichtet. Die Vorderseite 55 ist in einem spitzen Winkel, beispielsweise in einem Bereich zwischen 10° und 50°, zu einer axialen Richtung 29 ausgerichtet. Die Vorderseite 55 der Formschlusselemente 53 fungieren somit als Rampen oder Keile während des Einführens der Ankerhülse 1 in die Bohrung 14, sodass die Formschlusselemente 53 im Wesentlichen keine Blockierung während des Einführens der Ankerhülse 1 in die Bohrung 14 bewirken. Nach dem Erhärten des Verbundstoffes bewirken die Rückseite 54 eine formschlüssige Fixierung der Ankerhülse 1 an dem ausgehärteten Verbundstoff.

Der Außendurchmesser 47 an dem hinteren Endbereich 57 der Ankerhülse 1 entspricht dem Doppelten des radialen Abstandes 48 der radialen Außenseite 25 der Längsstege 23 der zentrischen Längsachse 28. Der radiale Abstand 46 der radialen Außenseite 26 des Umfangssteges 24 zu der zentrischen Längsachse 28 ist größer als der radiale Abstand 48 um den Betrag der Dicke oder der radialen Ausdehnung der Umfangsstege 24. Der Außendurchmesser 47 an dem hinteren Endbereich 57 ist damit um den doppelten Betrag der Dicke der Umfangsstege kleiner als der Außendurchmesser an dem Hauptbereich 56 der Ankerhülse 1 ohne Berücksichtigung der Formschlusselemente 53, d. h. nur bezüglich der Umfangsstege 24. Der Außendurchmesser 44 an dem Hauptbereich 56 der Ankerhülse 1 mit Berücksichtigung der Formschlusselemente 53 entspricht im Wesentlichen, d. h. mit einer Abweichung von weniger als 30%, 20%, 10 %, 5 % oder 3 %, dem Außendurchmesser 45 der Vorderwandung 50. **In** Fig. 3 ist der Außendurchmesser 45 ohne Berücksichtigung der Formschlusselemente 53 dargestellt. Der Außendurchmesser 44 des Setzflansches 44 entspricht im Wesentlichen, d. h. mit einer Abweichung von weniger als 30%, 20%, 10 %, 5 % oder 3 %, dem Außendurchmesser 44 an dem Hauptbereich 56 mit Berücksichtigung der Formschlusselemente 53 und/oder dem Außendurchmesser 44 der Vorderwandung 50.

Zur Fixierung des Fixierungsgegenstandes 10 an dem Verankerungsgrund 11 als dem Hochlochziegel 12 wird die Bohrung 14 als Bohrloch 14 mit im Wesentlichen konstanten Durchmesser in den Hochlochziegel 12 eingearbeitet. Der Durchmesser der Bohrung 14 ist geringfügig größer oder gleich dem Außendurchmesser 44 des Setzflansches 49 und dem Außendurchmesser 44 des Hauptbereiches 59 sowie dem Außendurchmesser der Vorderwandung 50. Die Ankerhülse 1 weist somit einen im Wesentlichen identischen Außendurchmesser 44 an dem Setzflansch 49, an dem Hauptbereich 59 mit Berücksichtigung der Formschlusselemente 53 und an der Vorderwandung 50 auf. Anschließend wird die Ankerhülse 1 beginnend mit dem vorderen Ende 41 in die Bohrung 14 eingeführt bis das hintere Ende 42 der Ankerhülse 1 vollständig in der Bohrung 14 angeordnet ist, d. h. das hintere Ende 42 mit der außenseitigen Fliese 16 fluchtet. Die Formschlusselemente 53 fungieren zusätzlich während des Einführens der Ankerhülse 1 in die Bohrung 14 zur zentrischen Ausrichtung der Ankerhülse 1 in der Bohrung 14. Anschließend wird der aushärtbare Verbundstoff in den Innenraum 32 injiziert und der Innenraum 32 im Wesentlichen vollständig mit dem Verbundstoff befüllt. Anschließend wird die Hauptankerstange 4 in den Innenraum 32 eingeführt, sodass der Verbundstoff verdrängt wird durch die Austrittsöffnungen 34 in einen Ringraum zwischen der Ankerhülse 1 und der Bohrung 14 sowie in die Hohlräume 13 des Hochlochziegels 12. Der Außendurchmesser 47 an dem hinteren Endbereich 57 der Ankerhülse 1 ist kleiner als der Außendurchmesser 45 an dem Hauptbereich 59 ohne Berücksichtigung der Formschlusselemente 53. Die radiale Ausdehnung des Zwischenraumes ist somit an dem hinteren Endbereich 57 größer als außerhalb des hinteren Endbereiches 57, sodass sich ein zylindermantelförmig Dichtring 19 in radialer Richtung 30 zwischen dem hinteren Endbereich 57 und der Bohrung 14 ausgebildet. Der Dichtring 19 weist eine große radiale Ausdehnung auf und ist vollständig mit dem aushärtbaren Verbundstoff befüllt. Die Austrittsöffnungen 36 an dem hinteren Endbereich 57 sind größer als die Austrittsöffnungen 35 an dem Hauptbereich 56, sodass der Verbundstoff mittels Verdrängen und Pressen bevorzugt durch die Austrittsöffnungen 36 austritt im Vergleich zu den kleineren Austrittsöffnungen 35. Der Setzflansch 49 verhindert aufgrund des Außendurchmessers 44, der nur geringfügig kleiner oder gleich ist wie der Durchmesser der Bohrung 14, dass Verbundstoff von dem zylindermantelförmigen Dichtring 19 nach außerhalb der Bohrung 14 gelangt. Der Setzflansch 49 fungiert damit als Ringdichtung für den noch nicht ausgehärtete Verbundstoff in dem Ringraum zwischen der radialen Außenseite des Setzflansches 49 und der Bohrung 14. Der Außendurchmesser der Ankerstange 3 als der Hauptankerstange 4 entspricht im Wesentlichen dem minimalen Innendurchmesser 33 der Öffnung 43 an dem hinteren Ende 42 an den Längsstegen 23, so dass auch aus der Öffnung 43 während des Einführens der Ankerstange 3 als der Hauptankerstange 4 in den Innenraum 32 im Wesentlichen kein Verbundstoff ausgepresst wird. Die radialen Innenseiten der Längsstege 23 fungieren während des Einführens in den Innenraum 32 zur Führung und Gleitlagerung der Ankerstange 3 als der Hauptankerstange 4. Nach dem Aushärten des Verbundstoffes ist die Ankerhülse 1 und die Hauptankerstange 4 form- und stoffschlüssig an dem Verankerungsgrund 1 befestigt. Dies wird insbesondere durch ausgehärteten Verbundstoff in den Hohlräumen 13 als Hinterschnitt des Verbundstoffes und durch die zusätzlichen Formschlusselemente 53 verbessert. Das Gewinde 6 an der radialen Außenseite 5 der Hauptankerstange 3 dient als Formschlussgeometrie zur formschlüssigen Befestigung der Hauptankerstange 4 an dem ausgehärteten Verbundstoff. Nach dem Aushärten des Verbundstoffes wird der Schraubenschaftes der Schraube 9 in die zentrische Gewindebohrung 7 der Hauptankerstange 4 eingeschraubt und damit das Anbauteil 18 als der Fixierungsgegenstand 17 gemäß der Darstellung in Fig. 1 und 2 an dem Verankerungsgrund 11 befestigt.

Insgesamt betrachtet sind mit der erfindungsgemäßen Ankerhülse 1 und dem erfindungsgemäßen Verankerungssystem 2 wesentliche Vorteile verbunden. Der kleine Außendurchmesser 47 an dem hinteren Endbereich 57 und die großen Austrittsöffnungen 36 an dem hinteren Endbereich 57 ermöglichen das vollständige und zuverlässige Befüllen des Dichtringes 19 mit dem Verbundstoff. Damit kann mit dem Verankerungssystem 2 auch in einem Feuchtraum, beispielsweise einem Bad in einer Wohnung, der Fixierungsgegenstand 17 befestigt werden. Der vollständig befüllte Dichtring 19 mit dem Verbundstoff gewährleistet eine zuverlässige Abdichtung, sodass kein Wasser und/oder Feuchtigkeit von außerhalb der Bohrung 14 in die Bohrung 14 gelangen kann.

## Patentansprüche

1. Ankerhülse (1) zur Verankerung einer Ankerstange (3) in einer Bohrung (14) in einem Verankerungsgrund (11) mit einem aushärtbaren Verbundstoff, umfassend
- einen in axialer Richtung (29) sich erstreckenden Innenraum (32), der von einer Innenseite (27) der Ankerhülse (1) begrenzt ist zur Aufnahme der Ankerstange (3) und des aushärtbaren Verbundstoffes,
- Austrittsöffnungen (34) zum Austreten des in den Innenraum (32) injizierten Verbundstoffes nach außerhalb der Ankerhülse (1) in die Bohrung (14),
- ein vorderes Ende (41),
- ein hinteres Ende (42) mit einer Öffnung (43) als hinteres Ende des Innenraumes (32) zur Einführung der Ankerstange (3),
**dadurch gekennzeichnet, dass**
die Ankerhülse (1) fiktiv in axialer Richtung (29) in einen axialen hinteren Endbereich (57) im Bereich des hinteren Endes (42) und in einen axialen Hauptbereich (56) außerhalb des axialen hinteren Endbereiches (57) unterteilt ist und an dem hinteren Endbereich (57) der Ankerhülse (1) der Außendurchmesser (47) der Ankerhülse (1) kleiner ist als der Außendurchmesser (45) an dem Hauptbereich (56) der Ankerhülse (1) zur Ausbildung eines Dichtringes (19) aus dem Verbundstoff zwischen einer radialen Außenseite (25) der Ankerhülse (1) an dem hinteren Endbereich (57) und einer Innenseite der Bohrung (14) in dem Verankerungsgrund (11) als Abdichtbereich (21), so dass die Ankerhülse (1) eine abdichtende Ankerhülse (1) ausgebildet.

2. Ankerhülse nach Anspruch 1,
**dadurch gekennzeichnet, dass**
an dem hinteren Endbereich (57) der Ankerhülse (1) das Verhältnis aus der Summe der Flächen der Austrittsöffnungen (34, 35, 36) der Ankerhülse (1) zu der Außenfläche der Ankerhülse (1) mit den Austrittsöffnungen (34, 35, 36) größer ist als dem Hauptbereich (56), um das Austreten des Verbundstoffes an dem hinteren Endbereich (57) im Vergleich zu dem Hauptbereich (56) zu erleichtern und ein Abdichten in einem Zwischenraum zwischen einer radialen Außenseite (25) der Ankerhülse (1) an dem hinteren Endbereich (57) und der Innenseite der Bohrung (14) in dem Verankerungsgrund (11) als Abdichtbereich (21) zu ermöglichen, so dass die Ankerhülse (1) eine abdichtende Ankerhülse (1) ausgebildet
und/oder
an dem hinteren Endbereich (57) die Fläche je einer Austrittsöffnung (34, 36) größer ist als die Fläche je einer Austrittsöffnung (34, 35) an dem Hauptbereich.

3. Ankerhülse nach Anspruch 1 oder 2,
**dadurch gekennzeichnet, dass**
an dem hinteren Endbereich (57) die Flächen von je wenigstens 50% oder 70 % der Austrittsöffnungen (34, 36), insbesondere sämtlicher jeweiligen Austrittsöffnungen (34, 36), größer sind als die Fläche je einer Austrittsöffnung (34, 35) an dem Hauptbereich (57).

4. Ankerhülse nach einem oder mehreren der vorhergehenden Ansprüche,
**dadurch gekennzeichnet, dass**
die axiale Ausdehnung (38) der Austrittsöffnungen (34, 36) an dem hinteren Endbereich (57) größer ist, insbesondere um das 0,5-, 1-, 3-, 5-, 10- oder 20-Fache größer ist, als die axiale Ausdehnung (37) der Austrittsöffnungen (34, 35) an dem Hauptbereich (56).

5. Ankerhülse nach einem oder mehreren der vorhergehenden Ansprüche,
**dadurch gekennzeichnet, dass**
die Ankerhülse (1) im Wesentlichen in axialer Richtung (29) ausgerichtete Längsstege (23) umfasst.

6. Ankerhülse nach einem oder mehreren der vorhergehenden Ansprüche,
**dadurch gekennzeichnet, dass**
die Ankerhülse (1) im Wesentlichen in radialer Richtung (31) ausgerichtete Umfangsstege (24) umfasst.

7. Ankerhülse nach Anspruch 5 und 6,
**dadurch gekennzeichnet, dass**
die Umfangsstege (24) an einer radialen Außenseite (25) der Längsstege (23) befestigt sind, so dass der radiale Abstand (48) der radialen Außenseiten (25) der Längsstege (23) zu der zentrischen Längsachse (28) der Ankerhülse (1) kleiner ist als der radiale Abstand (46) der radialen Außenseiten (26) der Umfangsstege (24) zu der zentrischen Längsachse (28) der Ankerhülse (1).

8. Ankerhülse nach einem oder mehreren der Ansprüche 5 bis 7,
**dadurch gekennzeichnet, dass**
je eine Austrittsöffnung (34, 35) an dem Hauptbereich (56) von zwei Längsstegen (23) und zwei Umfangsstegen (24) begrenzt ist.

9. Ankerhülse nach einem oder mehreren der Ansprüche 5 bis 8,
**dadurch gekennzeichnet, dass**
je eine Austrittsöffnung (34, 36) an dem hinteren Endbereich (57) von zwei Längsstegen (23), einem Umfangssteg (24) und einem Setzflansch (49) begrenzt ist.

10. Ankerhülse nach einem oder mehreren der Ansprüche 5 bis 9,
**dadurch gekennzeichnet, dass**
an dem hinteren Endbereich (57) keine Umfangsstege (24) ausgebildet sind.

11. Ankerhülse nach einem oder mehreren der Ansprüche 5 bis 10,
**dadurch gekennzeichnet, dass**
an dem hinteren Endbereich (57) der Ankerhülse (1) der Außendurchmesser (47) der Ankerhülse (1) kleiner ist als der Außendurchmesser (45) an dem Hauptbereich (56) der Ankerhülse, insbesondere kleiner ist als der Außendurchmesser (45) der Umfangsstege (24) an dem Hauptbereich (56) der Ankerhülse, weil an dem hinteren Endbereich (57) keine Umfangsstege (24) ausgebildet sind und der radiale Abstand (48) der radialen Außenseiten (25) der Längsstege (23) zu der zentrischen Längsachse (28) der Ankerhülse (1) kleiner ist als der radiale Abstand (46) der radialen Außenseiten (26) der Umfangsstege (24) zu der zentrischen Längsachse (28) der Ankerhülse (1).

12. Ankerhülse nach einem oder mehreren der vorhergehenden Ansprüche,
**dadurch gekennzeichnet, dass**
die radiale Außenseite (26) der Ankerhülse (1), insbesondere ausschließlich, mit einem minimalen radialen Abstand (48) zu der zentrischen Längsachse (28) an dem hinteren Endbereich (57) der Ankerhülse (1), insbesondere von den radialen Außenseiten (26) der Längsstege (23), ausgebildet ist.

13. Ankerhülse nach einem oder mehreren der vorhergehenden Ansprüche 6 bis 12,
**dadurch gekennzeichnet, dass**
die Differenz aus dem radialen Abstand (46) der radialen Außenseiten (26) der Umfangsstege (24) zu der zentrischen Längsachse (28) der Ankerhülse (1) zu dem radialen Abstand (48) der radialen Außenseiten (25) der Längsstege (23) zu der zentrischen Längsachse (28) der Ankerhülse (1) im Wesentlichen der radialen Ausdehnung der Umfangsstege (24) entspricht.

14. Verankerungssystem (2) zur Fixierung eines Fixierungsgegenstandes (17) in einer Bohrung (14) in einem Verankerungsgrund (11) mit einem aushärtbaren Verbundstoff, umfassend
- eine Ankerhülse (1),
- eine Ankerstange (3),
**dadurch gekennzeichnet, dass**
die Ankerhülse (1) gemäß einem oder mehrerer der vorhergehenden Ansprüche ausgebildet ist.

15. Verankerungssystem nach Anspruch 14,
**dadurch gekennzeichnet, dass**
die Ankerstange (3) zweiteilig ausgebildet ist mit einer Hauptankerstange (4) und einem Zusatzbauteil (8) zur, vorzugsweise form- und/oder kraftschlüssigen, Fixierung an der Hauptankerstange (4).

## Claims

1. Anchor sleeve (1) for anchoring an anchor rod (3) in a bore (14) in an anchoring surface (11) using a curable composite material, comprising
- an interior (32), which extends in the axial direction (29) and is limited by an inside (27) of the anchor sleeve (1), for receiving the anchor rod (3) and the curable composite material,
- outlet openings (34) for allowing the composite material that is injected into the interior (32) to exit out of the anchor sleeve (1) and into the bore (14),
- a front end (41),
- a rear end (42) having an opening (43) as the rear end of the interior (32) for the insertion of the anchor rod (3),
**characterised in that**
the anchor sleeve (1) is fictitiously divided, in the axial direction (29), into an axial rear end region (57) in the region of the rear end (42) and into an axial main region (56) outside the axial rear end region (57) and, at the rear end region (57) of the anchor sleeve (1), the outer diameter (47) of the anchor sleeve (1) is smaller than the outer diameter (45) at the main region (56) of the anchor sleeve (1) so as to form a sealing ring (19) made of the composite material between a radial outside (25) of the anchor sleeve (1) at the rear end region (57) and an inside of the bore (14) in the anchoring surface (11) as a sealing region (21) so that the anchor sleeve (1) formed a sealing anchor sleeve (1).

2. Anchor sleeve according to claim 1,
**characterised in that**
at the rear end region (57) of the anchor sleeve (1), the ratio of the sum of the faces of the outlet openings (34, 35, 36) of the anchor sleeve (1) to the outer face of the anchor sleeve (1) having the outlet openings (34, 35, 36) is greater than the main region (56), in order to facilitate the exit of the composite material at the rear end region (57) compared to the main region (56) and to allow sealing in a space between a radial outside (25) of the anchor sleeve (1) at the rear end region (57) and the inside of the bore (14) in the anchoring surface (11) as a sealing region (21) so that the anchor sleeve (1) formed a sealing anchor sleeve (1)
and/or,
at the rear end region (57), the face of each outlet opening (34, 36) is larger than the face of each outlet opening (34, 35) at the main region.

3. Anchor sleeve according to claim 1 or 2,
**characterised in that**
at the rear end region (57), the faces of at least 50% or 70% of the outlet openings (34, 36), in particular of all the respective outlet openings (34, 36), are larger than the face of each outlet opening (34, 35) at the main region (57).

4. Anchor sleeve according to one or more of the preceding claims,
**characterised in that**
the axial extent (38) of the outlet openings (34, 36) at the rear end region (57) is larger, in particular 0.5, 1, 3, 5, 10 or 20 times larger, than the axial extent (37) of the outlet openings (34, 35) at the main region (56).

5. Anchor sleeve according to one or more of the preceding claims,
**characterised in that**
the anchor sleeve (1) comprises longitudinal ribs (23) which are orientated substantially in the axial direction (29).

6. Anchor sleeve according to one or more of the preceding claims,
**characterised in that**
the anchor sleeve (1) comprises circumferential ribs (24) which are orientated substantially in the radial direction (31).

7. Anchor sleeve according to claims 5 and 6,
**characterised in that**
the circumferential ribs (24) are attached to a radial outside (25) of the longitudinal ribs (23) such that the radial distance (48) of the radial outsides (25) of the longitudinal ribs (23) from the central longitudinal axis (28) of the anchor sleeve (1) is smaller than the radial distance (46) of the radial outsides (26) of the circumferential ribs (24) from the central longitudinal axis (28) of the anchor sleeve (1).

8. Anchor sleeve according to one or more of claims 5 to 7,
**characterised in that**
each outlet opening (34, 35) at the main region (56) is limited by two longitudinal ribs (23) and two circumferential ribs (24).

9. Anchor sleeve according to one or more of claims 5 to 8,
**characterised in that**
each outlet opening (34, 36) at the rear end region (57) is limited by two longitudinal ribs (23), a circumferential rib (24) and a setting flange (49).

10. Anchor sleeve according to one or more of claims 5 to 9,
**characterised in that**
no circumferential ribs (24) are formed at the rear end region (57).

11. Anchor sleeve according to one or more of claims 5 to 10,
**characterised in that**
at the rear end region (57) of the anchor sleeve (1), the outer diameter (47) of the anchor sleeve (1) is smaller than the outer diameter (45) at the main region (56) of the anchor sleeve, in particular is smaller than the outer diameter (45) of the circumferential ribs (24) at the main region (56) of the anchor sleeve, because no circumferential ribs (24) are formed at the rear end region (57) and the radial distance (48) of the radial outsides (25) of the longitudinal ribs (23) from the central longitudinal axis (28) of the anchor sleeve (1) is smaller than the radial distance (46) of the radial outsides (26) of the circumferential ribs (24) from the central longitudinal axis (28) of the anchor sleeve (1).

12. Anchor sleeve according to one or more of the preceding claims,
**characterised in that**
the radial outside (26) of the anchor sleeve (1) is formed, in particular exclusively, at a minimum radial distance (48) from the central longitudinal axis (28) at the rear end region (57) of the anchor sleeve (1), in particular from the radial outsides (26) of the longitudinal ribs (23).

13. Anchor sleeve according to one or more of the preceding claims 6 to 12,
**characterised in that**
the difference between the radial distance (46) of the radial outsides (26) of the circumferential ribs (24) from the central longitudinal axis (28) of the anchor sleeve (1) and the radial distance (48) of the radial outsides (25) of the longitudinal ribs (23) from the central longitudinal axis (28) of the anchor sleeve (1) corresponds substantially to the radial extent of the circumferential ribs (24).

14. Anchoring system (2) for securing an object to be secured (17) in a bore (14) in an anchoring surface (11) using a curable composite material, comprising
- an anchor sleeve (1),
- an anchor rod (3),
**characterised in that**
the anchor sleeve (1) is designed according to one or more of the preceding claims.

15. Anchoring system according to claim 14,
**characterised in that**
the anchor rod (3) is designed in two parts, comprising a main anchor rod (4) and an additional component (8) to be secured to the main anchor rod (4), preferably form-fittingly and/or frictionally.

## Revendications

1. Douille d'ancrage (1) pour l'ancrage d'une tige d'ancrage (3) dans un alésage (14) dans un support d'ancrage (11) avec un matériau composite durcissable, comprenant
- un espace intérieur (32) s'étendant dans la direction axiale (29) qui est délimité par un côté intérieur (27) de la douille d'ancrage (1) pour la réception de la tige d'ancrage (3) et du matériau composite durcissable,
- des ouvertures de sortie (34) pour faire sortir le matériau composite injecté dans l'espace intérieur (32) vers l'extérieur de la douille d'ancrage (1) dans l'alésage (14),
- une extrémité avant (41),
- une extrémité arrière (42) comportant une ouverture (43) en tant qu'extrémité arrière de l'espace intérieur (32) pour l'introduction de la tige d'ancrage (3),
**caractérisée en ce que**
la douille d'ancrage (1) est fictivement divisée dans la direction axiale (29) en une zone d'extrémité arrière (57) axiale dans la zone de l'extrémité arrière (42) et en une zone principale (56) axiale à l'extérieur de la zone d'extrémité arrière (57) axiale et, au niveau de la zone d'extrémité arrière (57) de la douille d'ancrage (1), le diamètre extérieur (47) de la douille d'ancrage (1) est inférieur au diamètre extérieur (45) au niveau de la zone principale (56) de la douille d'ancrage (1) pour la formation d'une bague d'étanchéité (19) à partir du matériau composite entre un côté extérieur radial (25) de la douille d'ancrage (1) au niveau de la zone d'extrémité arrière (57) et un côté intérieur de l'alésage (14) dans le support d'ancrage (11) comme zone d'étanchéité (21), de sorte que la douille d'ancrage (1) formée une douille d'ancrage (1) assurant l'étanchéité.

2. Douille d'ancrage selon la revendication 1,
**caractérisée en ce que**
au niveau de la zone d'extrémité arrière (57) de la douille d'ancrage (1), le rapport entre la somme des surfaces des ouvertures de sortie (34, 35, 36) de la douille d'ancrage (1) et la surface extérieure de la douille d'ancrage (1) comportant les ouvertures de sortie (34, 35, 36) est supérieur à la zone principale (56), pour faciliter la sortie du matériau composite au niveau de la zone d'extrémité arrière (57) par rapport à la zone principale (56) et pour permettre l'étanchéité dans un espace intermédiaire entre un côté extérieur radial (25) de la douille d'ancrage (1) au niveau de la zone d'extrémité arrière (57) et le côté intérieur de l'alésage (14) dans le support d'ancrage (11) comme zone d'étanchéité (21), de sorte que la douille d'ancrage (1) formée une douille d'ancrage (1) assurant l'étanchéité et/ou que, au niveau de la zone d'extrémité arrière (57), la surface de chaque ouverture de sortie (34, 36) est supérieure à la surface de chaque ouverture de sortie (34, 35) au niveau de la zone principale.

3. Douille d'ancrage selon la revendication 1 ou 2,
**caractérisée en ce que**
au niveau de la zone d'extrémité arrière (57), les surfaces d'au moins 50 % ou 70 % des ouvertures de sortie (34, 36), en particulier de toutes les ouvertures de sortie (34, 36) respectives, sont supérieures à la surface de respectivement une ouverture de sortie (34, 35) au niveau de la zone principale (57).

4. Douille d'ancrage selon l'une ou plusieurs des revendications précédentes,
**caractérisée en ce que**
l'extension axiale (38) des ouvertures de sortie (34, 36) au niveau de la zone d'extrémité arrière (57) est supérieure, en particulier 0,5, 1, 3, 5, 10 ou 20 fois supérieure, à l'extension axiale (37) des ouvertures de sortie (34, 35) au niveau de la zone principale (56).

5. Douille d'ancrage selon l'une ou plusieurs des revendications précédentes,
**caractérisée en ce que**
la douille d'ancrage (1) comprend des nervures longitudinales (23) orientées sensiblement dans la direction axiale (29).

6. Douille d'ancrage selon l'une ou plusieurs des revendications précédentes,
**caractérisée en ce que**
la douille d'ancrage (1) comprend des nervures circonférentielles (24) orientées sensiblement dans la direction radiale (31).

7. Douille d'ancrage selon les revendications 5 et 6,
**caractérisée en ce que**
les nervures circonférentielles (24) sont fixées à un côté extérieur radial (25) des nervures longitudinales (23), de sorte que la distance radiale (48) des côtés extérieurs radiaux (25) des nervures longitudinales (23) par rapport à l'axe longitudinal central (28) de la douille d'ancrage (1) est inférieure à la distance radiale (46) des côtés extérieurs radiaux (26) des nervures circonférentielles (24) par rapport à l'axe longitudinal central (28) de la douille d'ancrage (1).

8. Douille d'ancrage selon l'une ou plusieurs des revendications 5 à 7,
**caractérisée en ce que**
respectivement une ouverture de sortie (34, 35) est délimitée au niveau de la zone principale (56) par deux nervures longitudinales (23) et deux nervures circonférentielles (24).

9. Douille d'ancrage selon l'une ou plusieurs des revendications 5 à 8,
**caractérisée en ce que**
respectivement une ouverture de sortie (34, 36) est délimitée au niveau de la zone d'extrémité arrière (57) par deux nervures longitudinales (23), une nervure circonférentielle (24) et une bride de positionnement (49).

10. Douille d'ancrage selon l'une ou plusieurs des revendications 5 à 9,
**caractérisée en ce que**
aucune nervure circonférentielle (24) n'est formée au niveau de la zone d'extrémité arrière (57).

11. Douille d'ancrage selon l'une ou plusieurs des revendications 5 à 10,
**caractérisée en ce que**
au niveau de la zone d'extrémité arrière (57) de la douille d'ancrage (1), le diamètre extérieur (47) de la douille d'ancrage (1) est inférieur au diamètre extérieur (45) au niveau de la zone principale (56) de la douille d'ancrage, en particulier est inférieur au diamètre extérieur (45) des nervures circonférentielles (24) au niveau de la zone principale (56) de la douille d'ancrage, parce qu'aucune nervure circonférentielle (24) n'est formée au niveau de la zone d'extrémité arrière (57) et que la distance radiale (48) des côtés extérieurs radiaux (25) des nervures longitudinales (23) par rapport à l'axe longitudinal central (28) de la douille d'ancrage (1) est inférieure à la distance radiale (46) des côtés extérieurs radiaux (26) des nervures circonférentielles (24) par rapport à l'axe longitudinal central (28) de la douille d'ancrage (1).

12. Douille d'ancrage selon l'une ou plusieurs des revendications précédentes,
**caractérisée en ce que**
le côté extérieur radial (26) de la douille d'ancrage (1) est formé, en particulier exclusivement, avec une distance radiale (48) minimale par rapport à l'axe longitudinal central (28) au niveau de la zone d'extrémité arrière (57) de la douille d'ancrage (1), en particulier par rapport aux côtés extérieurs radiaux (26) des nervures longitudinales (23).

13. Douille d'ancrage selon l'une ou plusieurs des revendications 6 à 12,
**caractérisée en ce que**
la différence entre la distance radiale (46) des côtés extérieurs radiaux (26) des nervures circonférentielles (24) par rapport à l'axe longitudinal central (28) de la douille d'ancrage (1) et la distance radiale (48) des côtés extérieurs radiaux (25) des nervures longitudinales (23) par rapport à l'axe longitudinal central (28) de la douille d'ancrage (1) correspond sensiblement à l'extension radiale des nervures circonférentielles (24).

14. Système d'ancrage (2) pour la fixation d'un objet de fixation (17) dans un alésage (14) dans un support d'ancrage (11) avec un matériau composite durcissable, comprenant
- une douille d'ancrage (1),
- une tige d'ancrage (3),
**caractérisé en ce que**
la douille d'ancrage (1) est formée selon l'une ou plusieurs des revendications précédentes.

15. Système d'ancrage selon la revendication 14,
**caractérisé en ce que**
la tige d'ancrage (3) est formée en deux parties avec une tige d'ancrage principale (4) et un composant supplémentaire (8) pour la fixation, de préférence par complémentarité de forme et/ou à force, sur la tige d'ancrage principale (4).
